# EUROPEAN PATENT SPECIFICATION

(11) **EP 0 668 209 B1**
(45) Date of publication and mention of the grant of the patent: **25.11.1998**
(21) Application number: 95200365.5
(22) Date of filing: 15.02.1995
(51) Int. Cl.: B62K 25/28, B62K 3/06, B62K 19/36

(54) **Bicycle frame of adjustable geometry**
Fahrradrahmen mit einstellbarer Geometrie
Cadre de bicyclette à géométric variable

(30) Priority: 16.02.1994 NL 9400238
(43) Date of publication of application: 23.08.1995
(73) Proprietor: Batavus B.V., NL-8444 AR Heerenveen (NL)
(72) Inventor: Schoonhoven, Willem Jorrit, NL-2611 PC Delft (NL)
(74) Representative: Smulders, Theodorus A.H.J., Ir.

(56) References cited:
- BE-A- 425 983
- DE-A- 4 123 643
- FR-A- 1 039 536
- FR-A- 2 480 202
- GB-A- 727 411
- US-A- 3 982 770
- US-A- 5 356 165
- PATENT ABSTRACTS OF JAPAN vol. 15 no. 447 (M-1179) ,14 November 1991 & JP-A-03 189433 (ATSUGI UNISIA CORP) 19 August 1991,

## Description

The invention relates to a bicycle according to the introductory portion of claim 1.

Such a bicycle is known from Belgian patent 425 983. In this known bicycle, the suspension element is adjustable by varying the axial force exerted by a secondary helical spring onto a shock absorber to control the friction generated by the shock absorber. Adjusting this secondary spring entails the side-effect that the force exerted by the secondary spring onto the main spring suspending the first frame part relative to the second frame part, by which force the main spring is compressed, is slightly changed.

Such bicycles and other bicycles known from practice are offered in a large variety of designs which especially differ from each other in the extent to which they are suitable for realizing high average speeds and in the amount to which they offer comfort in use. On the one hand there are racing and sports bicycles which enable high average speeds to be attained and on the other there are citybikes on which the rider is seated in a more comfortable but yet unnaturally bent position and which provides more comfortable though not highly comfortable riding properties.

The object of the invention is to provide a bicycle which offers improved riding and seat comfort over the citybike and which is at least substantially equally suitable for rapidly covering longer distances.

This object is realized according to the present invention by constructing a bicycle of the type described in the introductory portion, in the manner described in the characterizing portion of claim 1.

By varying the position of the parts of the frame relative to each other, the inclination of the steering rod of the front wheel suspension (the steering head angle) and the angle of a line, approximately parallel thereto, passing through the bicycle saddle and the crankshaft can be varied between a level position, wherein the bicycle offers particularly comfortable riding properties and enables an upright sitting position which is highly comfortable, especially in urban traffic, and a steep position, wherein the riding properties and sitting position are less comfortable but wherein the rider is better capable of utilizing his body weight for applying force to the pedals. The rider can thus adjust the bicycle to a comfortable position for the purpose of riding in urban traffic and over short distances, which entails frequent mounting and dismounting, and change the setting to an active position as soon as longer distances are to be cycled at more constant speeds.

If the suspension element can be adjusted to different fixed positions, the different settings of the suspension element define corresponding fixed relative distances between the parts of the frame. However, it is also possible for the suspension element to simultaneously constitute a spring element. In that case, a given setting of the suspension element is not associated with a fixed position but with a particular load/position curve. Accordingly, upon a change of the setting of the suspension element, not a fixed relative position of the parts of the frame will be modified, but the relative operative equilibrium position of the parts of the frame such as it arises at a given load will be adjusted. During riding, as a result of bumps and movements of the user, the parts of the frame will each time show deviations from a particular operative equilibrium position and return to that operative equilibrium position.

The invention can further be embodied in a bicycle frame according to claim 15, which is especially adapted for use in a bicycle according to the invention.

Particular embodiments of the invention are described in claims 2-14 and 16-20.

Hereinbelow the invention will be further explained on the basis of exemplary embodiments, with reference to the drawings, in which:
Fig. 1 is a side elevation of an exemplary embodiment of a bicycle according to the invention, and
Fig. 2 is a side elevation of a further exemplary embodiment of a bicycle according to the invention.

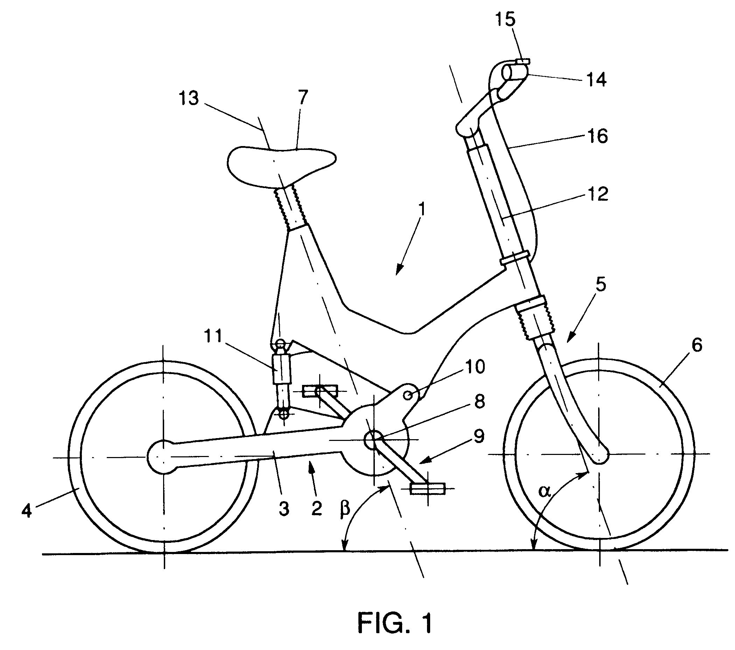

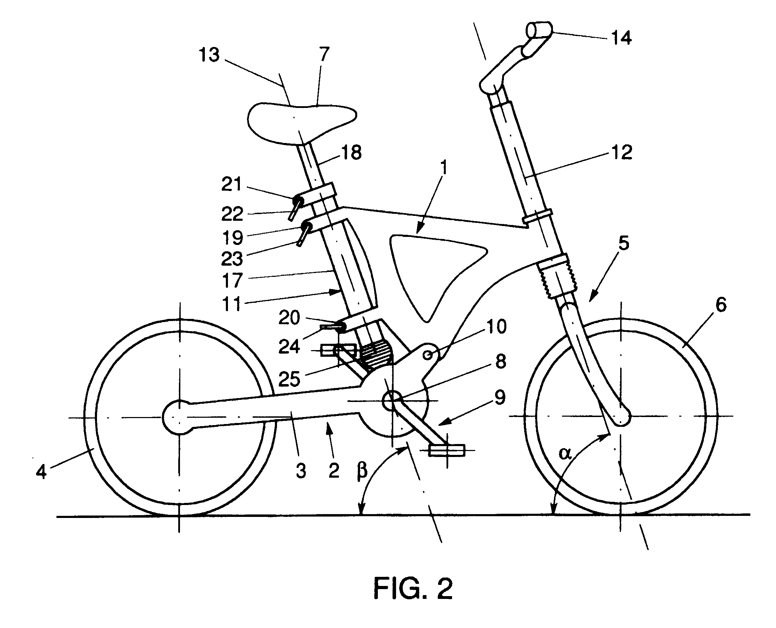

The invention will initially be explained with reference to the exemplary embodiment shown in Fig. 1. Then the example shown in Fig. 2 will be described and explained. Corresponding parts of the different embodiments are designated with identical reference numerals.

The bicycle according to the exemplary embodiment of the invention as shown in Fig. 1 comprises a frame 1 including a rear wheel suspension 2 comprising a rearwardly projecting arm 3 adjacent the end of which a rear wheel 4 is suspended. The bicycle further comprises a steerable front wheel suspension 5 in which a front wheel 6 is suspended, a saddle 7 and a pedal set 9 rotatable about a crankshaft 8.

The frame 1 comprises two parts capable of relative pivotal movement about a pivot 10 parallel to the crankshaft 8. A first part carries the front wheel suspension 5 and the saddle 7 and a second part carries at least the rearwardly projecting arm 3. Mounted between the first and the second part is a springy suspension element 11 for the purpose of maintaining the first and the second part in a relative, load-dependent operative equilibrium position with respect to each other. The suspension element 11 is adjustable for the purpose of adjusting that operative equilibrium position.

By varying the position or equilibrium position of the parts of the frame 1 relative to each other, the inclination of the steering rod 12 of the front wheel suspension 5 (the steering head angle) and the angle of a line 13, approximately parallel thereto, passing through the saddle 7 and the crankshaft 8 (the seat tube angle) can be varied between a relatively acute angle, preferably about 61-63°, in which the bicycle offers particularly comfortable riding properties and enables an upright sitting position which is highly comfortable especially in urban traffic, and a relatively obtuse angle, preferably 70-72°, in which riding properties and sitting position are less comfortable but in which the rider is better capable of employing his body weight for applying force to the pedals. Accordingly, the rider can adjust the bicycle to a comfortable position for the purpose of riding in urban traffic and over short distances, which entails frequent mounting and dismounting, and change the setting to an active position as soon as longer distances are to be cycled at more constant speeds.

It is also possible to make the adjustable suspension element of substantially rigid construction. In that case the different settings of the suspension element 11 define corresponding, substantially fixed relative positions of the parts of the frame 1. Preferably, however, the suspension element 11 at the same time constitutes a spring element permitting load-dependent deviations from an operative equilibrium position in each setting. In that case, a given setting of the suspension element 1 is not associated with a fixed position of the parts of the frame but with a particular load/position curve. Accordingly, a change of the setting of the suspension element 11 does not involve a modification of a fixed relative position of the parts of the frame 1 but an adjustment of the relative operative equilibrium position of the parts of the frame 1 arising at a given load. During riding, as a result of riding over unevennesses and by movements of the user, the parts of the frame 1 will continually show deviations from the operative equilibrium position and return to that operative equilibrium position again.

The geometry of the parts of the frame 1 as well as the adjustment possibilities of the suspension element are preferably chosen such that the steering head angle α and the seat tube angle β, which are mostly approximately equal, are adjustable between a comfortable setting and an active setting, whereby the angles α and β, if the bicycle is in the service position, are less than 69° when the suspension element 11 is in the comfortable setting and more than 70° (i.e. at least 1° more) when the suspension element 11 is in the active setting. With such a geometry and adjustability, on the one hand a clearly more comfortable position of the bicycle is achieved and on the other an active position of the bicycle is obtained in which it is approximately equivalent to the known citybikes in terms of driving efficiency.

A highly improved riding and practical comfort can be achieved if the steering head angle α and the seat tube angle β are less than 65° (i.e. at least 5° less than in the active position) if the suspension element 11 has been adjusted to the comfortable setting.

It can be chosen to shift the general character of the bicycle more in the athletic or comfortable direction by so choosing the geometry of the frame parts and the adjustment possibilities of the suspension element that the steering head angle α and the seat tube angle β can be varied within a different range. In order to obtain a considerable difference between the riding properties in the active and the comfortable position, it is preferred, however, to choose the geometry of the frame parts and the adjustment possibilities of the suspension element 11 such that the steering head angle α and the seat tube angle β, when the suspension element 11 is in the comfortable setting, is at least 7° smaller than in the case where the suspension element 11 is in the active setting.

The crankshaft 8 is bearing-mounted in the rearwardly projecting arm 3, and thus in the second part of the frame 1, and located rearwardly of the pivot 10. This provides the advantage that upon adjustment of the suspension element 11 the distance from the crankshaft 8 to the ground varies relatively little. A raised position of the crankshaft 8 makes it more difficult to mount and dismount and a lowered position of the crankshaft 8 increases the danger of the pedals touching the road surface when negotiating bends.

The fact that the crankshaft 8 is located lower than the pivot 10 also contributes to the limitation of variation in the distance between the crankshaft 8 and the ground when varying the length of the suspension element 11.

Preferably, the centre-to-centre distance between the crankshaft 8 and the pivot 10 is 75-125 mm. Given such a distance, on the one hand the variation in the distance between the crankshaft 8 and the road surface is limited and on the other the variation in the distance between the crankshaft 8 and the saddle 7 is limited. The fact that this distance is slightly smaller in the comfortable setting than in the active setting is not a drawback because during riding in the comfortable setting, driving efficiency is of secondary importance.

The suspension element 11 between the first part and the second part of the frame 1 comprises a length-adjustable gas spring. Similar gas springs are for instance used in office chairs and provide the advantage that adjustability, springing provisions and damping are united in a compact unit.

The bicycle shown comprises a handlebar 14, which, for the purpose of increasing operating convenience, mounts an operating means 15 for remote adjustment of the length of the gas spring 11. The geometry of the frame 1 as a whole can thus be adjusted during cycling and without the necessity of dismounting. The operating means 15 is connected with the gas spring 11 through a Bowden cable 16.

According to another exemplary embodiment, not shown, the gas spring communicates with a hydraulic pump and an electric motor for driving the pump, which electric motor is remotely operable by means of an operating means.

The drive of the bicycle shown is constructed as a cardan drive accommodated in the rearwardly projecting arm 3. Because the complete drive is suspended from the rearwardly projecting arm 3 which forms a rigid whole, it is not necessary to make the transmission of flexible design for compensating distance variations due to compression and extension. Further, the drive is well protected and can be supplied as a complete subassembly and be easily mounted.

Fig. 2 shows a bicycle according to the invention with the saddle 7 so fixed relative to a portion 17 of the suspension element 11 which is adjustable with respect to the first part of the frame 1, that upon adjustment of the suspension element 11 a set position of the saddle 7 with respect to that adjustable portion of the suspension element 11 is maintained. As a result, the variation in the distance between the saddle 7 and the crankshaft 8 arising upon adjustment between the comfortable position and the active position is markedly limited. As a consequence, in the comfortable setting the rider's position is more upright and closer to the ground, but at practically the same distance from the crankshaft 8, so that the reduction of the driving efficiency in the comfortable position is limited.

The fixation of the saddle 7 relative to the adjustable portion of the suspension element is achieved in a constructionally simple manner in that the suspension element 11 comprises a carrier 17 carrying the saddle 7, which carrier is adjustable between different positions which are fixed relative to the first part of the frame 1.

The carrier 17 is of tubular construction. Located between the saddle 7 and the carrier 17 is a saddle pin 18 which is axially adjustable between different positions fixed relative to the carrier 17. To that end, the tubular carrier 17 comprises a ring 21 which embraces the saddle pin 18. The ring 21 can be tensioned by means of a quick-acting clamp 22. Such means for fixing the saddle pin are known and are generally used.

The first part of the frame 1 comprises two clamping portions 19, 20 each embracing the carrier 17 and being tensionable by means of clamps 23, 24. The carrier 17 can thus be fixed in axial direction in different positions relative to the first part of the frame 1. The further the carrier 17 projects downwardly with respect to the first part of the frame 1, the steeper steering head angle α and the seat tube angle β in the so obtained position. Upon the axial displacement of the tubular carrier 17, the distance between the saddle 7 and the crankshaft remains substantially the same because the distance between the saddle 7 and the lower end of the suspension element 11 is not affected by the adjustment of the carrier.

To limit the force exerted on the suspension element 11, the first part of the frame 1 can also be of such construction that the suspension element engages the second part of the frame more rearwardly, and hence at a greater distance from the pivot 10. To some extent this will be at the expense of the advantage that the distance between the saddle and the crankshaft remains substantially constant upon adjustment of the suspension element, but the distance between the saddle and the crankshaft will also vary to a lesser extent in this embodiment of the invention upon adjustment of the suspension element than, for instance, in the case of the embodiment shown in Fig. 1.

The suspension element 11 according to Fig. 2 comprises a resilient element 25 of elastomeric material between the carrier 17 and the rearwardly projecting arm 3, so that the suspension of the rear wheel is of springy design. Of course, the suspension element 11 may also be so designed that the rearwardly projecting arm is rigidly retained in each position, and a springing suspension can be obtained in many other ways, for instance by means of a rubber spring element or a gas spring or helical spring accommodated in the suspension element.

## Claims

1. A bicycle comprising a frame (1) including a rear wheel suspension (2) comprising at least a rearwardly projecting arm (3), a steerable front wheel suspension (5), a saddle (7) and a pedal set (9) rotatable about a crankshaft (8), wherein the frame (1) comprises two parts capable of relative pivotal movement about a pivot (10) parallel to the crankshaft (8), of which a first part carries at least the front wheel suspension (5) and the saddle (7) and a second part comprises at least the rearwardly projecting arm (3), wherein an adjustable suspension element (11) is mounted between the first and the second part for maintaining the first and the second part in a relative position or a load-dependent operative equilibrium position, wherein the front wheel suspension (5) is capable of swivelling around a centreline (12), and wherein a crankshaft-saddle line (13) intersects the crankshaft (8) and a particular point of the saddle (7), the centreline (12) and the crankshaft-saddle line (13) each extending at an angle to the ground when the first and the second part are maintained in the relative position or the operative equilibrium position, **characterized in that** the suspension element (11) is adjustable for the purpose of adjusting the relative position or the operative equilibrium position between a comfortable setting and an active setting, said angle to the ground of the centreline (12) and of the crankshaft-saddle line (13) in the comfortable setting differing at least 5° from said angle to the ground of the centreline (12) and, respectively, of the crankshaft-saddle line (13) in the active setting.

2. A bicycle according to claim 1, wherein the centreline (12) and the crankshaft-saddle line (13) run approximately parallel to each other, whereby said lines, if the bicycle is in the operative position, extend at an angle of less than 69° to the ground when the suspension element (11) is in the comfortable setting and extend at an angle of more than 70° to the ground when the suspension element (11) is in the active setting.

3. A bicycle according to claim 1, wherein the centreline (12) around which the front wheel suspension (5) is capable of swivelling and the crankshaft-saddle line (13) run approximately parallel to each other, whereby said lines, if the bicycle is in the operative position, extend at an angle of less than 65° to the ground when the suspension element (11) is in the comfortable setting and extend at an angle of more than 70° to the ground when the suspension element (11) is in the active setting.

4. A bicycle according to any one of the preceding claims, wherein the centreline (12) and the crankshaft-saddle line (13) run approximately parallel to each other, whereby said lines, if the bicycle is in the operative position, extend at a particular angle to the ground, which angle is at least 7° smaller in the case where the suspension element (11) is in the comfortable setting than in the case where the suspension element (11) is in the active setting.

5. A bicycle according to any one of the preceding claims, wherein the crankshaft (8) is bearing-mounted in the second part of the frame (1) and is located rearwardly of the pivot (10).

6. A bicycle according to any one of the preceding claims, wherein the crankshaft (8) is bearing-mounted in the second part of the frame (1) and is located lower than the pivot (10).

7. A bicycle according to claim 5 or 6, wherein the centre-to-centre distance between the crankshaft (8) and the pivot (10) is 75-125 mm.

8. A bicycle according to any one of the preceding claims, wherein the suspension element (11) between the first part and the second part of the frame (1) comprises a length-adjustable gas spring.

9. A bicycle according to claim 8, comprising a handlebar with an operating means for remote adjustment of the length of the gas spring.

10. A bicycle according to claim 9, comprising a hydraulic pump communicating with the gas spring and an electric motor for driving the pump, which electric motor is operable by said operating means.

11. A bicycle according to any one of the preceding claims, wherein the saddle (7) is so fixed relative to a portion of the suspension element (11) that is adjustable relative to said first part of the frame (1), that upon adjustment of the suspension element (11) a set position of the saddle (7) relative to said adjustable portion of the suspension element (11) is maintained.

12. A bicycle according to claim 11, wherein the suspension element (11) comprises a carrier (17) which is adjustable between at least two positions fixed relative to said first part of the frame (1), which carrier also carries the saddle (7).

13. A bicycle according to claim 12, wherein the carrier (17) is of tubular design and wherein a saddle pin (18) between the saddle (7) and the carrier (17) is axially adjustable between at least two positions fixed relative to the carrier (17).

14. A bicycle according to claim 13, wherein said first part of the frame (1) comprises at least one clamping means (19, 20) embracing the carrier (17).

15. A bicycle frame for use in a bicycle according to any one of the preceding claims, comprising a steering head assembly housing for receiving a steerable front wheel suspension, a connection for a saddle support, a crankshaft (8) holder and a rear wheel suspension with at least a rearwardly projecting arm, which frame (1) comprises two parts capable of relative pivotal movement about a pivot (10), of which a first part comprises at least the steering head assembly housing and the connection for a saddle support and a second part comprises at least the rearwardly projecting arm, a suspension element (11) being mounted between the first and the second part for maintaining the first and the second part in a relative position or load-dependent operative equilibrium position, which suspension element (11) is adjustable for adjusting the said relative position or operative equilibrium position between a comfortable setting and an active setting, such that, in operative condition in the comfortable setting, the orientation to the ground of said first part differs at least 5° from the orientation to the ground of said first part in operative condition in the active setting.

16. A bicycle frame according to claim 15, wherein the crankshaft (8) holder is bearing-mounted in the second part of the frame (1) and is located rearwardly of the pivot (10).

17. A bicycle frame according to claim 15 or 16, wherein the crankshaft (8) holder is bearing-mounted in the second part of the frame (1) and is located lower than the pivot (10).

18. A bicycle frame according to claim 16 or 17, wherein the centre-to-centre distance between the crankshaft (8) and the pivot (10) is 75-125 mm.

19. A bicycle frame according to any one of claims 15-18, wherein the suspension element (11) between the first part and the second part of the frame (1) comprises a length-adjustable gas spring.

20. A bicycle frame according to claim 19, comprising a hydraulic pump communicating with the gas spring and an electric motor for driving the pump.

## Patentansprüche

1. Fahrrad mit einem Rahmen (1) , welcher eine Hinterradaufhängung (2) mit zumindest einem nach hinten herausragenden Arm (3), eine lenkbare Vorderradaufhängung (5), einen Sattel (7) und einen, um eine Tretkurbel (8) drehbaren Pedalsatz (9) aufweist, wobei der Rahmen (1) zwei Teile vorsieht, welche zu einer relativen Drehbewegung um einen Drehpunkt (10) parallel zu der Tretkurbel (8) in der Lage sind, wobei ein erster Teil zumindest die Vorderradaufhängung (5) und den Sattel (7) trägt und ein zweiter Teil zumindest den nach hinten vorstehenden Arm (3) aufweist, wobei zwischen dem ersten und dem zweiten Teil ein verstellbares Aufhängungselement (11) angebracht ist, um den ersten und den zweiten Teil in einer relativen Position bzw. einer belastungsabhängigen, operativen Gleichgewichtslage zu halten, wobei die Vorderradaufhängung (5) sich um eine Mittellinie (12) drehen kann und eine Tretkurbel-Sattel-Linie (13) die Tretkurbel (8) und einen bestimmten Punkt des Sattels (7) kreuzt, wobei sich die Mittellinie (12) und die Tretkurbel-Sattel-Linie (13) jeweils in einem Winkel zu dem Boden erstrecken, wenn der erste und der zweite Teil in der relativen Position bzw. der operativen Gleichgewichtslage gehalten werden, **dadurch gekennzeichnet**, daß das Aufhängungselement (11) zwecks Einstellens der relativen Position bzw. der operativen Gleichgewichtslage zwischen einer bequemen Einstellung und einer aktiven Einstellung verstellbar ist, wobei der Winkel von der Mittellinie (12) bzw. der Tretkurbel-Sattel-Linie (13) zum Boden in der bequemen Einstellung zumindest um 5° von dem Winkel von der Mittellinie (12) bzw. der Tretkurbel-Sattel-Linie (13) zum Boden in der aktiven Einstellung differiert.

2. Fahrrad nach Anspruch 1, bei welchem die Mittellinie (12) und die Tretkurbel-Sattel-Linie (13) in etwa parallel zueinander verlaufen, wobei sich im betriebsbereiten Zustand des Fahrrades die Linien in einem Winkel von weniger als 69° zum Boden erstrecken, wenn sich das Aufhängungselement (11) in der bequemen Einstellung befindet und diese sich in einem Winkel von über 70° zum Boden erstrecken, wenn sich das Aufhängungselement (11) in der aktiven Einstellung befindet.

3. Fahrrad nach Anspruch 1, bei welchem die Mittellinie (12), um welche sich die Vorderradaufhängung (5) drehen kann, und die Tretkurbel-Sattel-Linie (13) in etwa parallel zueinander verlaufen, wobei sich die Linien, wenn sich das Fahrrad in betriebsbereiter Position befindet, bei bequemer Einstellung des Aufhängungselementes (11) in einem Winkel von weniger als 65° zum Boden erstrecken, während diese in einem Winkel von über 70° zum Boden verlaufen, wenn sich das Aufhängungselement (11) in der aktiven Einstellung befindet.

4. Fahrrad nach einem der vorangegangenen Ansprüche, bei welchem die Mittellinie (12) und die Tretkurbel-Sattel-Linie (13) in etwa parallel zueinander verlaufen, wobei, wenn sich das Fahrrad im Betriebszustand befindet, die Linien in einem bestimmten Winkel zum Boden verlaufen, welcher, wenn sich das Aufhängungselement (11) in der bequemen Einstellung befindet, mindestens 7° kleiner als in dem Fall ist, in dem sich das Aufhängungselement in der aktiven Einstellung befindet.

5. Fahrrad nach einem der vorangegangenen Ansprüche, bei welchem die Tretkurbel (8) in dem zweiten Teil des Rahmens (1) an einem Lager befestigt und hinter dem Drehpunkt (10) angeordnet ist.

6. Fahrrad nach einem der vorangegangenen Ansprüche, bei welchem die Tretkurbel in dem zweiten Teil des Rahmens (1) an einem Lager befestigt und unterhalb des Drehpunktes (10) angeordnet ist.

7. Fahrrad nach Anspruch 5 oder 6, bei welchem der Mitte-Mitte-Abstand zwischen der Tretkurbel (8) und dem Drehpunkt (10) 75-125 mm beträgt.

8. Fahrrad nach einem der vorangegangenen Ansprüche, bei welchem das Aufhängungselement (11) zwischen dem ersten und dem zweiten Teil des Rahmens (1) eine längenverstellbare Gasfeder aufweist.

9. Fahrrad nach Anspruch 8, welches eine Lenkstange mit einer Bedienungsvorrichtung zur Ferneinstellung der Länge der Gasfeder aufweist.

10. Fahrrad nach Anspruch 9, welches eine hydraulische Pumpe vorsieht, die mit der Gasfeder und einem elektrischen Motor zur Steuerung der Pumpe zusammenwirkt, wobei der elektrische Motor über die Bedienungsvorrichtung betrieben werden kann.

11. Fahrrad nach einem der vorangegangenen Ansprüche, bei welchem der Sattel (7) relativ zu einem Teil des Aufhängungselementes (11), welches gegenüber dem ersten Teil des Rahmens (1) verstellbar ist, so befestigt ist, daß bei Verstellen des Aufhängungselementes (11) eine eingestellte Position des Sattels (7) relativ zu dem verstellbaren Teil des Aufhängungselementes (11) beibehalten wird.

12. Fahrrad nach Anspruch 11, bei welchem das Aufhängungselement (11) einen Träger (17) aufweist, welcher zwischen mindestens zwei, gegenüber dem ersten Teil des Rahmens (1) festen Positionen verstellbar ist, wobei der Träger ebenfalls den Sattel (7) trägt.

13. Fahrrad nach Anspruch 12, bei welchem der Träger (17) röhrenförmig ausgeführt ist und bei welchem ein Sattelrohr (18) zwischen dem Sattel (7) und dem Träger (17) zwischen mindestens zwei, gegenüber dem Träger (17) festen Positionen axial verstellbar ist.

14. Fahrrad nach Anspruch 13, bei welchem der erste Teil des Rahmens (1) mindestens eine Spannvorrichtung (19, 20) aufweist, welche den Träger (17) umfaßt.

15. Fahrradrahmen zur Verwendung für ein Fahrrad nach einem der vorangegangenen Ansprüche, welcher ein Lenkungsgehäuse zur Aufnahme einer lenkbaren Vorderradaufhängung, ein Verbindungsstück für eine Sattelstütze, eine Haltevorrichtung für die Tretkurbel (8) und eine Hinterradaufhängung mit mindestens einem, nach hinten herausragenden Arm aufweist, wobei der Rahmen (1) zwei Teile vorsieht, welche eine relative Drehbewegung um einen Drehpunkt (10) ausführen können, von denen ein erster Teil zumindest das Lenkungsgehäuse und das Verbindungsstück für eine Sattelstütze und ein zweiter Teil zumindest den nach hinten herausragenden Arm aufweist, wobei ein Aufhängungselement (11) zwischen dem ersten und dem zweiten Teil angebracht ist, um den ersten und den zweiten Teil in einer relativen Position bzw. belastungsabhängigen, operativen Gleichgewichtslage zu halten, welches verstellbar ist, um die relative Position bzw. operative Gleichgewichtslage zwischen einer bequemen Einstellung und einer aktiven Einstellung so einzustellen, daß die Ausrichtung des ersten Teiles zum Boden bei der bequemen Einstellung im betriebsbereiten Zustand mindestens um 5° von der Ausrichtung des ersten Teiles zum Boden bei der aktiven Einstellung im betriebsbereiten Zustand abweicht.

16. Fahrradrahmen nach Anspruch 15, bei welchem die Haltevorrichtung der Tretkurbel (8) in dem zweiten Teil des Rahmens (1) an einem Lager befestigt und hinter dem Drehpunkt (10) angeordnet ist.

17. Fahrradrahmen nach Anspruch 15 oder 16, bei welchem die Haltevorrichtung der Tretkurbel (8) in dem zweiten Teil des Rahmens (1) befestigt und unterhalb des Drehpunktes (10) angeordnet ist.

18. Fahrradrahmen nach Anspruch 16 oder 17, bei welchem der Mitte-Mitte-Abstand zwischen der Tretkurbel (8) und dem Drehpunkt (10) 75-125 mm beträgt.

19. Fahrradrahmen nach einem der Ansprüche 15-18, bei welchem das Aufhängungselement (11) zwischen dem ersten und dem zweiten Teil des Rahmens (1) eine längenverstellbare Gasfeder aufweist.

20. Fahrradrahmen nach Anspruch 19, welcher eine hydraulische Pumpe vorsieht, die mit der Gasfeder und einem elektrischen Motor zur Steuerung der Pumpe zusammenwirkt.

## Revendications

1. Bicyclette comprenant un cadre (1) incluant une suspension de roue arrière (2) comportant au moins un bras en saillie vers l'arrière (3), une suspension de roue avant dirigeable (5), une selle (7) et un pédalier (9) tournant autour d'un vilebrequin (8), le cadre (1) comprenant deux parties pouvant effectuer un mouvement pivotant relatif autour d'un pivot (10), parallèle au vilebrequin (8), dont une première partie supporte au moins la suspension de roue avant (5) et la selle (7), et une deuxième partie comporte au moins un bras en saillie vers l'arrière (3), un élément de suspension ajustable (11) étant monté entre la première et la deuxième parties pour maintenir ces parties dans une position relative ou dans une position d'équilibre dépendant de la charge pendant l'utilisation, la suspension de roue avant (15) pouvant osciller autour d'un axe (12), et une ligne vilebrequin-selle (13) présentant une intersection avec le vilebrequin (8) et un point particulier de la selle (7), l'axe (12) et la ligne vilebrequin-selle (13) s'étendant chacun en formant un certain angle par rapport au sol lorsque les première et deuxième parties sont maintenues dans une position relative ou dans une position d'équilibre pendant l'utilisation, caractérisé en ce que l'élément de suspension (11) est ajustable de façon à ajuster la position relative ou la position d'équilibre pendant l'utilisation entre une position confortable et une position active, ledit angle par rapport au sol de l'axe (12) et la ligne vilebrequinselle (13) dans la position confortable différant d'au moins 5° dudit angle par rapport au sol de l'axe (12) et, respectivement, de la ligne vilebrequin-selle (13) dans la position active.

2. Bicyclette selon la revendication 1, dans laquelle l'axe (12) et la ligne vilebrequin-selle (13) sont approximativement parallèles l'une à l'autre, lesdites lignes s'étendant, lorsque la bicyclette est en position d'utilisation, selon un angle de moins de 69° par rapport au sol lorsque l'élément de suspension (11) est en position confortable, et selon un angle de plus de 70° par rapport au sol lorsque l'élément de suspension (11) est en position active.

3. Bicyclette selon la revendication 1, dans laquelle l'axe (12) autour duquel la suspension de roue avant (5) peut osciller et la ligne vilebrequin-selle (13) sont approximativement parallèles l'une à l'autre, lesdites lignes s'étendant, lorsque la bicyclette est en position d'utilisation, selon un angle de moins de 65° par rapport au sol lorsque l'élément de suspension (11) est en position confortable, et selon un angle de plus de 70° par rapport au sol lorsque l'élément de suspension (11) est en position active.

4. Bicyclette selon l'une quelconque des revendications précédentes, dans laquelle l'axe (12) et la ligne vilebrequin-selle (13) sont approximativement parallèles l'une à l'autre, lesdites lignes s'étendant, lorsque la bicyclette est en position d'utilisation, selon un angle particulier par rapport au sol, cet angle étant inférieur d'au moins 7° lorsque l'élément de suspension (11) est en position confortable à l'angle rencontré lorsque l'élément de suspension (11) est en position active.

5. Bicyclette selon l'une quelconque des revendications précédentes, dans laquelle le vilebrequin (8) est monté sur roulement dans la deuxième partie du cadre (1) et est placé en arrière du pivot (10).

6. Bicyclette selon l'une quelconque des revendications précédentes, dans laquelle le vilebrequin (8) est monté sur roulement dans la deuxième partie du cadre (1) et est placé plus bas que le pivot (10).

7. Bicyclette selon l'une quelconque des revendications 5 ou 6, dans laquelle la distance centre à centre entre le vilebrequin (8) et le pivot (10) est de 75 à 125 mm.

8. Bicyclette selon l'une quelconque des revendications précédentes, dans laquelle l'élément de suspension (11) comprend, entre la première et la deuxième parties du cadre (1), un ressort à gaz réglable en longueur.

9. Bicyclette selon la revendication 8, comprenant un guidon pourvu d'un moyen d'actionnement pour régler à distance la longueur du ressort à gaz.

10. Bicyclette selon la revendication 9, comprenant une pompe hydraulique communiquant avec le ressort à gaz et un moteur électrique pour actionner la pompe, le moteur électrique étant activé par ledit moyen d'actionnement.

11. Bicyclette selon l'une quelconque des revendications précédentes, dans laquelle la selle (7) est fixée par rapport à une partie de l'élément de suspension (11) qui peut être réglée par rapport à ladite première partie du cadre (1), de telle manière que, lors du réglage de l'élément de suspension (11), une position définie de la selle (7) par rapport à ladite partie réglable de l'élément de suspension (11) est conservée.

12. Bicyclette selon la revendication 11, dans laquelle l'élément de suspension (11) comprend un support (17) qui peut être réglé entre au moins deux positions définies par rapport à ladite première partie du cadre (1), ledit support supportant également la selle (7).

13. Bicyclette selon la revendication 12, dans laquelle le support (17) est de conception tubulaire, et dans laquelle une broche de selle (18) placée entre la selle (7) et le support (17) peut être réglée dans le sens axial, entre au moins deux positions définies par rapport audit support (17).

14. Bicyclette selon la revendication 13, dans laquelle ladite première partie du cadre (1) comprend au moins un moyen de serrage (19,20) enserrant le support (17).

15. Cadre de bicyclette à utiliser sur une bicyclette selon l'une quelconque des revendications précédentes, comprenant un logement pour ensemble de tête de direction dans lequel sont logés une suspension de roue avant dirigeable, un raccordement pour le support de selle, un support de vilebrequin (8) et une suspension de roue arrière comportant au moins un bras en saillie vers l'arrière, le cadre (1) comprenant deux parties pouvant effectuer un mouvement de pivotement relatif autour d'un pivot (10), dont une première partie comprenant au moins le logement pour ensemble de tête de direction et le raccordement pour le support de selle, et une deuxième partie comprenant au moins le bras en saillie vers l'arrière, un élément de suspension (11) étant monté entre la première et la deuxième parties pour maintenir ces parties dans une position relative ou dans une position d'équilibre dépendant de la charge pendant l'utilisation, l'élément de suspension (11) pouvant être réglé de façon à ajuster ladite position relative ou position d'équilibre pendant l'utilisation entre une position confortable et une position active, de telle sorte que, en condition d'utilisation en position confortable, l'orientation par rapport au sol de ladite première partie diffère d'au moins 5° de l'orientation par rapport au sol de ladite première partie en condition d'utilisation en position active.

16. Bicyclette selon la revendication 15, dans laquelle le support du vilebrequin (8) est monté sur roulement dans la deuxième partie du cadre (1), et est situé en arrière du pivot (10).

17. Bicyclette selon l'une quelconque des revendications 15 ou 16, dans laquelle le support du vilebrequin (8) est monté sur roulement dans la deuxième partie du cadre (1), et est situé plus bas que le pivot (10).

18. Bicyclette selon l'une quelconque des revendications 16 ou 17, dans laquelle la distance centre à centre entre le vilebrequin (8) et le pivot (10) est de 75 à 125 mm.

19. Bicyclette selon l'une quelconque des revendications 15 à 18, dans laquelle l'élément de suspension (11) comprend, entre la première et la deuxième parties du cadre (1), un ressort à gaz réglable en longueur.

20. Bicyclette selon la revendication 19, comprenant une pompe hydraulique communiquant avec le ressort à gaz et un moteur électrique pour actionner la pompe.
